# EUROPEAN PATENT SPECIFICATION

(11) **EP 1 319 869 B1**
(45) Date of publication and mention of the grant of the patent: **04.05.2005**
(21) Application number: 02425645.5
(22) Date of filing: 25.10.2002
(51) Int. Cl.: F16H 25/22

(54) **Ball screw drive with long duration and reduced noisiness**
Kugelgewindetrieb mit hoher Lebendsdauer und reduziertem Geräusch
Vis à billes de longue durée et peu bruyant

(30) Priority: 11.12.2001 IT RM20010725
(43) Date of publication of application: 18.06.2003
(73) Proprietor: Umbra Cuscinetti S.p.A., 06034 Foligno (IT)
(72) Inventor: Pacieri, Francesca, 06049 Spoleto (IT); Pizzoni, Luciano, 06034 Foligno (IT); Perni, Federico, 06039 Trevi (IT)
(74) Representative: Lanzoni, Luciano

(56) References cited:
- DE-A- 4 235 842
- US-A- 5 377 552
- US-A- 5 782 135
- US-B1- 6 203 207

## Description

The present invention relates to a ball screw drive with reduced wear of the recirculating elements, reduced operating noisiness, hence with characteristics of long duration and high rotation speeds, in particular for industrial and aerospace applications, corresponding to the preamble of claim 1.

It is well known that in a normal screw-nut screw the rubbing of the screw against the nut screw reduces performance. In a ball screw, between the thread of the screw and that of the nut screw (or lead screw) arc interposed balls which by their rolling prevent the aforesaid rubbing.

Heretofore, manufacturers of rolling screws, generally ball screws, have tried to reduce the wear of the parts in contact by reducing friction between balls and races. This is the aim of US Patent 5,782,135, which comprises, in a ball screw for a vacuum apparatus, the employment of a first group of balls made of a plastic material having polytetrafluoroethylene (PTFE) as the main component and of a second group of balls made of metallic or ceramic material. The improvement provided by the aforesaid solution is limited to the release of a lubricating film made of crystalline PTFE provided on the surface of the balls of said second group, which favours the rolling of the balls. Moreover, the diameter of the balls of each of the two groups is in relation to the quantity of lubricating material to be released when operating.

The closest prior art document DE 42 35 842 C2 provides for the adoption of load-bearing balls, made of ceramic, alternating with spacer balls of smaller diameter, made of a material traditionally used in ball screws (steel). The employment of the alternating configuration of the balls, whereby there is no ball-against-ball rubbing, and the lack of affinity between the materials in contact entail the reduction of the wear of the parts. This solution, however, fails to prevent, especially at the high rotation speeds commonly found in many sectors of application of the ball screws, especially industrial ones, the generation of high impact forces of the spacer balls (generally made of steel) against the recirculating elements due to the centrifugal forces in action.

A main aim of the present invention is to reduce damages to the recirculating elements in a ball screw.

Another aim of the present invention is to prevent high intensity impacts of the balls against the recirculating elements to prevent the excitement of such resonance frequencies of the assembly as to cause high amplitude vibrations. Such vibrations, in addition to generating high noise levels, can compromise the very functionality of the ball screw.

An aim, therefore, is to reduce the noisiness of the ball screw, in particular at higher operating speeds.

A further aim of the present invention is to increase the rotating speed of the parts of the screw in relative motion: thus, the ball screw is enhanced in such a way as to increase the product D*n of the assembly, where D indicates the ball centre diameter and n the number of rotations per minute.

Yet another aim of the invention is to reduce operating temperatures.

These aims are achieved, in accordance with the present invention, for the same geometry of the parts and the rotating speed of a ball screw, through a reduction of the impacts of the balls on the recirculating elements and a reduction of the centrifugal forces that the rolling elements discharge on the rolling races.

Therefore the invention, such as it is characterised by the claims that follow, provides a ball screw, comprising load-bearing balls made of ceramic material alternating with spacer balls having a smaller diameter than the load-bearing balls, which, from a general viewpoint, is characterised in that each spacer ball is positioned in orderly fashion between two load-bearing balls and is made of a material having a volume mass or density that does not exceed 3 g/cm³.

Said material can advantageously be a plastic material or a metallic material. As a plastic material, polyetheretherketone, a thermoplastic polymer obtained by polymerising an ether-etherketone group.

Further features and advantages of the invention shall become more readily apparent from the detailed description that follows of a preferred embodiment, illustrated purely by way of non limiting example in the accompanying drawings, in which:
- Figure 1 shows a partial schematic lateral view, partially sectioned, of a ball screw according to the present invention; and
- Figure 2 shows a partial schematic plan view of two load-bearing balls and a spacer ball of the ball screw of Figure 1.

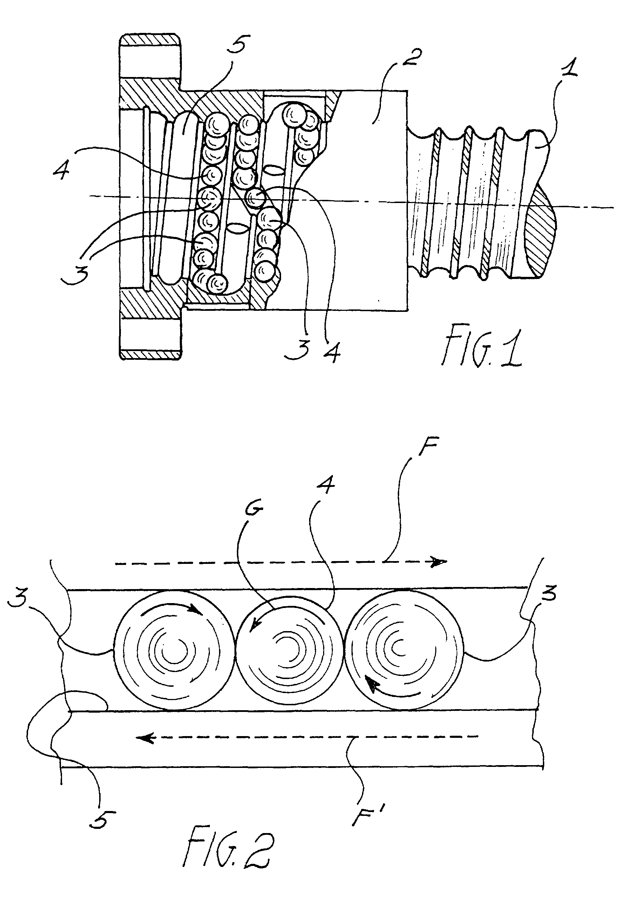

With reference to Figure 1, the number 1 indicates a screw, the number 2 a nut screw, or lead screw, the number 3 generally indicates a load-bearing ball and the number 4 indicates a spacer ball in a rolling race 5 of the nut screw 2.

Figure 2 shows a in a rolling race 5 of the nut screw two load-bearing balls 3 and an interposed spacer ball 4. The load-bearing balls 3, made of ceramic material, for instance advantageously silica nitride, are subjected to rotations in the directions indicated by the arrows in Figure 2, due to the relative motion of screw and nut screw represented schematically by the arrows F and, respectively, F'. The arrow G indicates the contrary direction of rotation of the spacer ball 4, having smaller diameter than that of the load-bearing balls 3. Preferably, the spacer ball 4 has a smaller diameter than that of the load-bearing balls by such an amount as never to be loaded under any of the operating conditions of the ball screw according to the invention. In this way, the separating balls 4 remain unloaded even in the presence of the maximum external load applied to the nut screw, so that, never simultaneously touching the races of the screw and of the nut screw, they remain free to rotate, without rubbing or friction, between the adjacent load-bearing balls 3 regardless of the applied load.

All balls are subject, by centrifugal force, to collisions or impacts against the recirculating elements, but, according to the invention, the spacer balls 4, which are positioned singularly alternating to the load-bearing balls 3, are made of a material having low volume mass or density, in any case no greater than 3 g/cm³, measured under standard conditions, and thus cause much more limited impacts thanks to their low volume mass.

The spacer balls 4, jointly with the use of load-bearing balls 3 made of ceramic material, in accordance with the present invention, are made of plastic material, or in any case of a synthetic material, and preferably of a plastic material whose volume mass does not exceed 2.5 g/cm³. Advantageously, the volume mass of said material is no greater than 2.0 g/cm³. In particular, it has been found advantageous to make the spacer balls 4 of polyetheretherketone, a thermoplastic polymer obtained from the polymerisation of an ether-etherketone group, commonly know with the name of *peek,* which has a volume mass of 1.3 - 1.4 g/cm³ and mechanical characteristics that make it suitable for use; it is thereby possible to obtain, for the same speed of rotation, impact forces on the recirculating elements that are more than 80% smaller than with equal steel balls. Hence, it is possible to increase the speed of rotation, until obtaining a product D*n at least up to 350,000 which is a particularly significant value if one considers that ball screws using common steel balls hardly exceed the value of 100,000.

Moreover, there are not high intensity impacts on the recirculating elements. Noisiness is reduced, as reduced are, consequently, operating temperatures.

The same advantages can be obtained by using spacer balls of metallic material, for instance light alloys, for instance aluminium alloys, also having volume mass that is no greater than 3.0 g/cm³. In this case, the minimum reduction of the impact forces of the balls on the rolling races of screw and nut screw and on the recirculating elements is more than 60% with respect to equal steel balls.

Naturally, the invention thus conceived can be subject to numerous modifications and variations, without thereby departing from the scope of the same inventive concept that characterises it in accordance with the claims that follow.

## Claims

1. Ball screw drive of long duration and reduced noisiness comprising load-bearing balls (3) made of ceramic material alternating with spacer balls (4) having a smaller diameter than the load-bearing balls, wherein each spacer ball (4) is positioned in orderly fashion between two load-bearing balls (3) and one by one between two load-bearing balls (3); **characterised in that** each spacer ball (4) is made of a plastic material having a volume mass or density that does not exceed 2 g/cm³.

2. Ball screw, as claimed in claim 1, **characterised in that** said plastic material is polyetheretherketone.

3. Ball screw, as claimed in claim 1, **characterised in that** said load-bearing balls (3) are made of silica nitride.

4. Ball screw, as claimed in claim 1, **characterised in that** said spacer balls (4) have a smaller diameter than that of the load-bearing balls (3) to such an extent that the spacer balls do not bear any load under any operating condition of the ball screw.

## Patentansprüche

1. Kugelgewindetrieb mit hoher Lebensdauer und reduziertem Geräusch, enthaltend belastbare Kugeln (3) aus Keramikmaterial, die sich mit Abstandskugeln (4) abwechseln, welche einen kleineren Durchmesser haben als die belastbaren Kugeln, wobei jede Abstandskugel (4) in geordneter Weise zwischen zwei belastbaren Kugeln (3) angeordnet ist und eine neben der anderen zwischen zwei belastbaren Kugeln (3); **dadurch gekennzeichnet, dass** jede Abstandskugel (4) aus einem Kunststoffinaterial hergestellt ist, welches eine Volumenmasse oder Dichte hat, die nicht über 2 g/cm³ hinausgeht.

2. Kugelgewindetrieb nach Patentanspruch 1, **dadurch gekennzeichnet, dass** das genannte Kunststoffmaterial Polyetheretherketon ist.

3. Kugelgewindetrieb nach Patentanspruch 1, **dadurch gekennzeichnet, dass** die genannten belastbaren Kugeln (3) aus Quarznitrid hergestellt sind.

4. Kugelgewindetrieb nach Patentanspruch 1, **dadurch gekennzeichnet, dass** die genannten Abstandskugeln (4) einen kleineren Durchmesser haben als die belastbaren Kugeln (3), und zwar um eine solche Menge, dass die Abstandskugeln keinerlei Belastung aushalten müssen, unter welchen Arbeitsbedingungen des Kugelgewindetriebs auch immer.

## Revendications

1. Vis à billes de longue durée et peu bruyante comprenant des billes portant la charge (3) réalisées en matière céramique alternées avec des billes entretoises (4) ayant un diamètre plus petit que les billes portant la charge, où chaque bille entretoise (4) est positionnée d'une façon ordonnée entre deux billes portant la charge (3); **caractérisée en ce que** chaque bille entretoise (4) est réalisée en matière plastique ayant une masse de volume ou densité qui ne dépasse pas 2 g/cm³.

2. Vis à billes selon la revendication 1, **caractérisée en ce que** ladite matière plastique est polyéthertercétone.

3. Vis à billes selon la revendication 1, **caractérisée en ce que** lesdites billes portant la charge (3) sont fabriquées en nitrure de silicium.

4. Vis à billes selon la revendication 1, **caractérisée en ce que** lesdites billes entretoises (4) ont un diamètre plus petit que celui des billes portant la charge (3) dans une telle mesure que les billes entretoises ne portent aucune charge, dans n'importe quelle condition de travail de la vis à billes.
